# FASCICULE DE BREVET EUROPEEN

(11) **EP 3 065 089 B1**
(45) Date de publication et mention de la délivrance du brevet: **20.12.2017**
(21) Numéro de dépôt: 15305315.2
(22) Date de dépôt: 02.03.2015
(51) Int. Cl.: G06K 19/077

(54) **PROCÉDÉ DE FABRICATION D'UN DISPOSITIF RADIOFRÉQUENCE À ANTENNE PASSIVE FILAIRE**
HERSTELLUNGSVERFAHREN EINER FUNKVORRICHTUNG MIT PASSIVER DRAHTANTENNE
METHOD FOR MANUFACTURING A RADIOFREQUENCY DEVICE WITH PASSIVE WIRE ANTENNA

(43) Date de publication de la demande: 07.09.2016
(73) Titulaire: Gemalto SA, 92190 Meudon (FR)
(72) Inventeur: Gaspari, Sebastien, 13881 Gemenos Cedex (FR); Cuny, Yves, 13881 Gemenos Cedex (FR); Lacaze, Brigitte, 13881 Gemenos Cedex (FR); Seban, Frédérick, 13881 Gemenos Cedex (FR)
(74) Mandataire: Milharo, Emilien

(56) Documents cités:
- WO-A1-2014/006300
- WO-A1-2014/206579

## Description

L'invention concerne un procédé de fabrication d'un dispositif radiofréquence comprenant un premier circuit d'antenne relié à une puce radiofréquence et un second circuit d'antenne associé /couplé au premier circuit. Il concerne également le dispositif obtenu.

Plus particulièrement, l'invention concerne des dispositifs tels que des supports à puce sans-contact, des cartes à puce sans contact, des étiquettes électroniques d'identification (RFID), des passeports électroniques sans-contact, des dispositifs à antenne passive ou antenne relais. L'invention vise notamment des documents de voyage électroniques sans-contact (passeports électroniques et visas électroniques), les cartes bancaires ou tout autre produit sans-contact.

Ces dispositifs peuvent être conformes aux spécifications de l'ICAO (acronyme de l'expression anglo-saxonne "International Civil Aviation Organization") et/ou norme ISO/IEC 14443. Ils peuvent fonctionner dans différentes gamme de fréquence notamment UHF - entre 860 et 960 Mhz ou ISO/IEC 14443 à 13,56 Mhz.

Des dispositifs radiofréquences peuvent comporter une antenne passive associée à un transpondeur radiofréquence dans le but d'augmenter la portée de communication. Dans le domaine UHF la portée peut être de plusieurs mètres pour communiquer des données avec un lecteur radiofréquence.

Les inventeurs ont eu connaissance d'un dispositif radiofréquence UHF comportant une antenne passive réalisée sur un premier substrat par gravure tandis que le transpondeur radiofréquence (comportant la puce connectée à une antenne) est réalisé sur un second substrat distinct par technologie filaire. Les deux substrats sont ensuite assemblés par lamination.

Les inventeurs ont constaté des problèmes de reproductibilité de performances de communication notamment la portée et des problèmes de fabrication. Les deux substrats précités ne sont pas stables dans leur positionnement relatif l'un vis-à-vis de l'autre (la position de l'un par rapport à l'autre n'est pas reproductible et entraine de grosse variation de Fréquence et donc de portée)

L'invention vise à résoudre l'inconvénient précité.

En particulier, l'invention vise à améliorer la reproductibilité du positionnement d'un premier circuit d'antenne (du transpondeur) par rapport à une seconde antenne (passive) à afin d'améliorer la portée et simplifier la fabrication.

L'invention propose un procédé simple d'exécution, facile à mettre en oeuvre.

L'invention propose dans son principe selon un mode préféré de réalisation de réaliser les antennes sur un même substrat (monocouche ou multicouche) et avec la technologie filaire. La puce est de préférence connectée en flip chip (puce retournée) à une antenne filaire grâce à des plages d'interconnexion réalisées sur des portions ou alternances de fil conducteur électrique.

A cet effet, l'invention a pour objet un procédé de fabrication d'un dispositif radiofréquence comprenant un premier circuit d'antenne reliée à une puce radiofréquence et un second circuit d'antenne associé /couplé au premier circuit ,
caractérisé en ce qu'il comprend les étapes suivantes :
- formation du premier circuit d'antenne sous forme de fil conducteur déposé de manière guidée sur un premier substrat,
- formation du second circuit d'antenne (9) sous forme de fil conducteur déposé de manière guidée à distance calibrée du premier circuit d'antenne.

Ainsi, l'invention permet de réaliser les deux antennes en filaire avec précision d'agencement de l'une par rapport à l'autre.

Les inventeurs ont trouvés que des disparités de portée d'un même lot de transpondeur radiofréquence s'expliquaient par des disparités d'agencement entre les deux antennes. Ces disparités d'agencement semblent s'expliquer par des imprécisions de positionnement entre les deux antennes lors du report d'un substrat à circuit d'antenne sur l'autre.

Ces variations de positionnement relatif entre les antennes s'expliquent aussi du fait d'une lamination des deux substrats à circuit d'antenne réalisés indépendamment l'un de l'autre surtout quand les matières des substrats assemblés et technologie de réalisation d'antenne sont différentes.

Grâce aux dispositions de l'invention, on gagne en fiabilité et reproductibilité en évitant les variations susvisées.

Les deux antennes sont réalisées de manière guidée avec précision sur un même substrat (ou substrat à plusieurs couches, feuilles liées). L'agencement relatif des deux antennes entre-elles demeure inchangé au cours de la fabrication.

Le procédé comprend d'autres étapes :
- Le second circuit d'antenne est déposé sur le même premier substrat ou autre substrat pré-positionné par rapport au premier substrat avant formation des circuits d'antenne.
- Le premier circuit comprend des portions terminales d'interconnexion à la puce radiofréquence sous forme d'alternances ;
- Les portions de fil sont déposées par broderie ou incrustation sur un substrat ;
- Le second circuit constitue une antenne passive couplée avec le transpondeur radiofréquence ;
- Le procédé comprend une étape de dépôt de matière conductrice anisotropique sur chaque portion terminale du premier circuit d'antenne et une étape de report et connexion d'une puce enrobée / encapsulée via cette matière conductrice anisotropique ;
- Le procédé comprend une étape de dépôt de matière conductrice par impression notamment sérigraphie sur chaque portion terminale du premier circuit d'antenne et une étape de report et connexion d'une puce nue via cette matière conductrice ;
- Le procédé comprend une étape d'enrobage / encapsulation de la puce dans un boîtier, à l'exception de ses plots, avant son report contre les portions terminales de connexion.

L'invention a également pour objet un dispositif radiofréquence correspondant au procédé susvisé.

En particulier, le dispositif radiofréquence comprend:
- un premier circuit d'antenne sous forme de fil conducteur disposé sur un premier substrat.
- un second circuit d'antenne sous forme de fil conducteur disposé sur le même premier substrat et à distance calibrée du premier circuit d'antenne.

Description des figures :
- La figure 1 illustre une formation du transpondeur radiofréquence avec une première antenne conforme à un premier mode de mise en oeuvre du procédé de l'invention;
- La figure 2 illustre une étape d'association de la seconde antenne conforme au premier mode de mise en oeuvre du procédé de l'invention;
- La figure 3 illustre une formation du transpondeur radiofréquence avec une première antenne conforme à un second mode de mise en oeuvre du procédé de l'invention;
- La figure 4 illustre une étape d'association de la seconde antenne conforme au second mode de mise en oeuvre du procédé de l'invention;

### Description

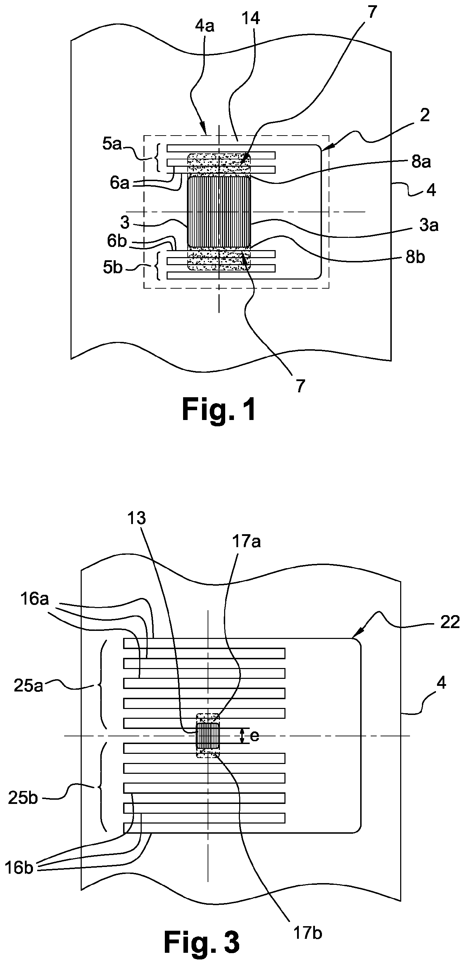

A la figure 1 est illustré un premier mode de mise en oeuvre du procédé de fabrication d'un dispositif radiofréquence selon de l'invention. Selon procédé, le dispositif comprend un premier circuit d'antenne 2 reliée à une puce radiofréquence 3 et un second circuit d'antenne associé /couplé au premier circuit une formation du transpondeur radiofréquence avec une première antenne

Selon ce premier mode, le procédé de l'invention prévoit de former un premier circuit d'antenne 2 sous forme de fil conducteur.

Dans l'exemple (fig.1), le fil est de préférence déposé de manière guidée sur un premier substrat 4. Parmi les méthodes connues et préférées, le fil est déposé et fixé sur le substrat par incrustation aux ultrasons. Le fil conducteur peut être également déposé par technique de broderie ou couture. Ces techniques permettent de reporter et guider précisément le dépôt de fil sur un substrat.

Par exemple, la tolérance de précision du positionnement du fil peut être inférieure à 0.05 mm pour l'incrustation de fil.

Le substrat utilisé est notamment en plastique (PET, PU, PVC, PC, Papier, Teslin®) pour l'incrustation. Il peut être en (ou comprendre un) textile tissé ou non tissé de préférence enduit / imprégné / revêtu d'un matériau améliorant la tenue mécanique du textile pour la broderie ou la couture.

Selon une caractéristique de l'invention, le premier circuit 1 comprend des portions terminales d'interconnexion 5a, 5b à la puce radiofréquence sous forme d'alternances 6a, 6b.

Dans l'exemple, l'antenne comprend la formation d'au moins une boucle fermée avec une spire et des alternances ou zigzags 6a, 6b en tant que portions terminales 5a, 5b de la boucle. Les portions de la boucle sont sensiblement rectilignes et la boucle a une forme générale en « U ».

Selon une caractéristique de ce premier mode, le procédé prévoit une étape de dépôt de matière conductrice anisotropique 7 sur chaque portion terminale du premier circuit d'antenne ;

Dans l'exemple, on dépose un film anisotropique 7 recouvrant les deux portions terminales ou alternances 6a, 6b de manière à couvrir au moins une ou de préférence plusieurs alternances de chaque portion terminale 5a, 5b d'interconnexion.

Alternativement, on peut déposer une matière anisotropique sous forme de pate (ACP).

Ensuite, selon une autre caractéristique de ce mode, l'invention prévoit une étape de report et connexion d'une puce 3 enrobée / encapsulée dans une matière d'encapsulation 3a. La connexion s'effectue via cette matière conductrice anisotropique 7. L'encapsulation / enrobage / surmoulage plastique (par exemple en résine époxy ou résine thermodurcissable) est préférée pour permettre des puces de plus grande capacité fonctionnelle (mémoire, performance) et dimensions que les puce UHF. Typiquement, les puces selon l'invention ont une surface supérieure à 0,3 X 0,3 mm2 voire supérieure à 0,5 X 0,5 mm2.

Le module comprend de préférence des plages d'interconnexion 8a, 8b reliant des plots de communication radiofréquence de la puce, de manière à offrir une plus grande surface d'interconnexion ou de connexion ohmique avec les alternances de fils. Dans les exemples on peut utiliser des modules de type MCC8 ou MOB4 respectivement des sociétés Infineon ou NXP. Ce mode est préféré avec un tel conditionnement de module pour des puces notamment de type UHF lorsque ces puces seront plus volumineuses du fait notamment de plus de capacités ou fonctionnalités.

Une connexion sous forme de puce retournée (flip-chip) est moins souhaitée du fait d'une fragilisation des puces avec de plus grandes dimensions.

Le cas échéant, on peut réaliser une connexion capacitive entre le module et les portions terminales. Les portions terminales peuvent être recouvertes d'une matière conductrice 17a, 17b (non représentée sur la figure 1 à la place de la matière 7 mais sur la fig. 3) notamment imprimée et un isolant est placé entre des plages 8a, 8b du module pour s'interposer entre les plages 17a, 17b et les plages 8a, 8b.

Alternativement avec des puces conditionnées sous forme de module comme ci-dessus, l'invention peut prévoir de connecter par soudure des portions filaires terminales du premier circuit d'antenne sur les plages d'interconnexion de ces modules. Le module peut avoir été reporté au préalable sur la feuille 4 ou après réalisation de l'antenne.

Le conditionnement 3a de puce permet de reporter et de fixer sous pression la puce sans risquer de l'endommager. En outre, la puce est plus protégée pour les opérations ultérieures de lamination ou simplement d'utilisation. Il est ainsi possible de la reporter, de la connecter et de la fixer par collage comme en flip chip (puce retournée).

Le transpondeur ainsi formé présente une réponse en fréquence de valeur supérieure ou égale à la fréquence cible et de préférence c'est l'antenne secondaire (second circuit d'antenne 9 qui ramènera la fréquence résultante de l'ensemble à une valeur de fréquence cible ou souhaitée. Dans l'exemple, le second circuit d'antenne 9 (secondaire) est calculée de manière à ramener la fréquence globale à une utilisation souhaitée en UHF entre 860 et 960 Mhz, le premier circuit d'antenne 2, 22 (primaire) de transpondeur peut être comprise entre 800 et 1500 Mhz.

Selon une autre caractéristique, l'invention prévoit selon le premier mode de former le second circuit d'antenne 9 également sous forme de fil conducteur et sur le même substrat 4 que précédemment. Ce second circuit d'antenne 9 permet d'augmenter la portée du transpondeur radiofréquence. Alternativement, le substrat 4 peut être formé de deux ou plusieurs couches ou feuilles et de préférence avec au moins une ouverture de réception de la puce et/ou le premier circuit.

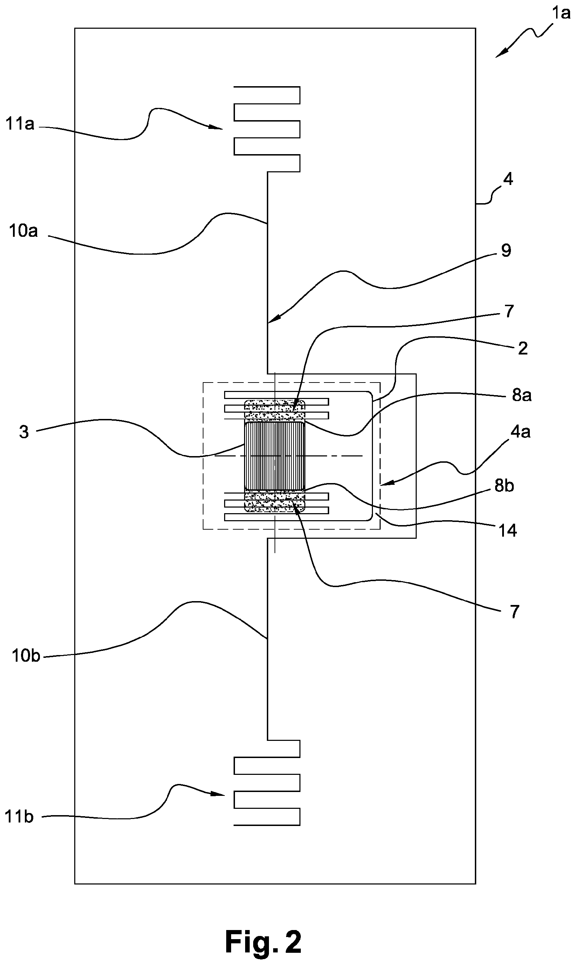

Dans l'exemple, cette étape est illustrée à la figure 2.

La seconde antenne 4 est ici une antenne passive qui est positionnée à distance (A, B, C) calibrée du premier circuit d'antenne 2. On utilise de préférence une technique de dépôt de fil incrusté comme précédemment. Toutefois, d'autres techniques de fil guidé ou dépôt précis de piste d'antenne connu de l'homme de l'art, peut être envisagé.

La seconde antenne forme aussi un « U » qui encadre / coiffe la partie en « U » de la première antenne 2 et à distance de cette dernière.

La seconde antenne 9 comporte des branches rectilignes 10a, 10b s'étendant du haut des branches du « U » dans des directions opposées au module.

Les branches ont des terminaisons 11a, 11b en forme d'alternances ou zigzag.

Les écarts latéraux A et C et écart transversal B du second circuit d'antenne par rapport au premier circuit d'antenne sont parfaitement contrôlés grâce à la technique d'incrustation filaire.

A la figure 3, est illustré un second mode de mise en oeuvre du procédé de l'invention.

La première antenne 22 est formée sensiblement comme précédemment avec cependant plus d'alternances 25a, 25b à l'intérieur du « U ». L'écartement « e » entre les dernières alternances correspond sensiblement à une demi-largeur de puce nue 13.

Cet agencement d'antenne est destiné à recevoir une puce nue de petites dimensions comme celle des puces UHF normales de l'ordre de 0,3 x 0,3 mm.

Selon une caractéristique de ce second mode, le procédé comprend une étape de dépôt de matière conductrice 17a, 17b par impression, notamment sérigraphique, sur chaque portion terminale 25a, 25b du premier circuit d'antenne et une étape de report et connexion d'une puce nue 13 via cette matière conductrice.

Dans l'exemple, figure 3, on dépose par sérigraphie deux zones ou plages distinctes d'interconnexion 17a, 17b de matière conductrice recouvrant au moins en partie une alternance terminale de fil conducteur voire deux 16a, 16b. Ces zones d'interconnexion 17a, 17b offrent des plages d'accueil permettant de recevoir une puce.

Alternativement, on peut imprimer par jet de matière conductrice, jet d''encre conductrice.

La puce peut être reportée avant séchage complet (ou coalescence) de la matière conductrice ou évaporation d'un solvant éventuel.

La puce comporte de préférence des plots pointus saillants (stud dump) formés sur les zones de connexion électrique de la puce. Ces plots pointus pénètrent de préférence la matière conductrice imprimée pour connecter la première antenne 22.

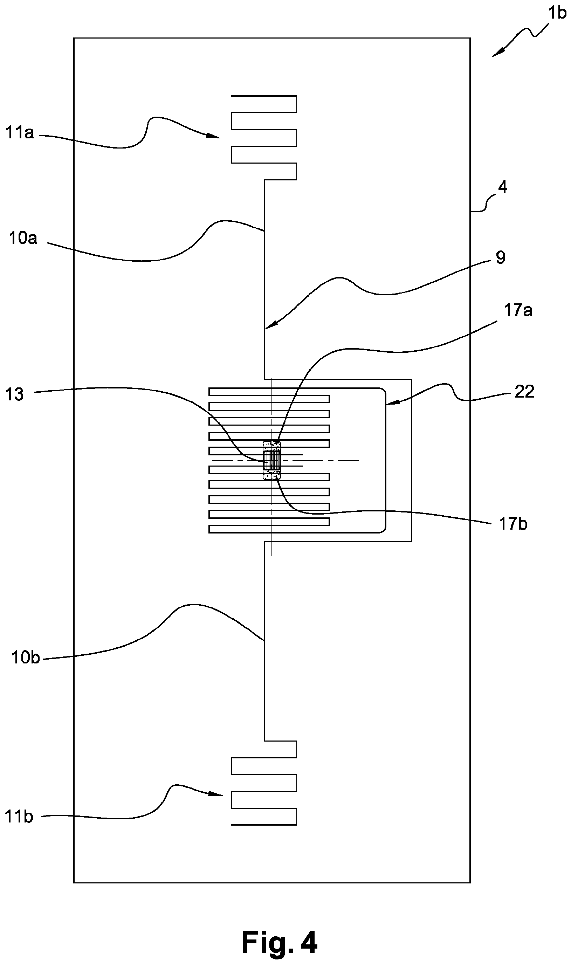

Le cas échéant, la puce est collée (voire partiellement enrobée à la base) sur les zones imprimées 17a, 17b avec de la colle conductrice ou anisotropique (non représentée). Ensuite, à la figure 4, est illustrée l'étape de formation de la seconde antenne passive 19. Cette étape est similaire ou identique à celle employée pour réaliser l'antenne passive de la figure 2. Les mêmes numéros représentant des éléments identiques ou similaires.

Comme précédemment, l'invention permet de respecter scrupuleusement les écarts A, B et C influant sur la portée. Des variations de 1 à 1,5 millimètre peuvent conduire à une variation de portée de la communication du transpondeur pouvant aller de 1 ou 2m voire quelques mètres.

Du fait d'un même substrat, les deux antennes (2, 9) ou (22, 9) de chaque mode de réalisation ne glissent pas (ou ne se déplacent pas) l'une par rapport à l'autre au cours d'une lamination.

On obtient une meilleure stabilité dimensionnelle des antennes l'une par rapport à l'autre et une meilleure reproductibilité des performances de communication radiofréquence.

Le substrat portant le transpondeur et l'antenne passive forme un produit fini ou un insert (inlay) destiné à être introduit dans tout produit visé par l'invention ou transformé à ajout de matière (carte, passeport, emballage, vêtement, cartonnage, surmoulage...). Il peut être recouvert par au moins une couche ou feuille de recouvrement décoration ou d'impression graphique, couche papier, fibreuse. La couche peut être déposée par impression, jet de matière ou lamination.

Le cas échéant, le substrat 4 peut se composer de deux substrats fixés ensemble avant incrustation des antennes, 9, 2 ou 22: un second substrat portant le second circuit d'antenne 9 et un premier substrat portant uniquement le premier circuit d'antenne 2, 22 de manière à renforcer ou protéger la zone de la puce. Le premier substrat peut être sur la surface portant la seconde antenne 9 ou sur la face opposée en regard d'une cavité 4a ménagée dans le second substrat (figure 2).

Le premier substrat portant le premier circuit d'antenne 2, 22 peut être en retrait par rapport au second substrat de manière à ce que le premier circuit d'antenne soit positionné sensiblement dans la cavité / ouverture 4a et puisse le cas échéant renforcer ou protéger la zone de la puce notamment par la cavité elle-même ou par une matière de protection, résine, colle remplissant au moins partiellement la cavité.

Le cas échéant, l'invention prévoit une cavité ou ouverture dans le substrat 4 pour recevoir au moins l'enrobage de la puce ou à la limite tout le premier circuit 2, 3, 8a, 8b.

La cavité peut être formée par superposition d'une feuille support pleine et d'une feuille comportant une ouverture ou fenêtre située au niveau du module voire du transpondeur radiofréquence formé par le premier circuit d'antenne et module 3, 3a. Ainsi, tout le circuit transpondeur peut être protégé par une cavité ou dénivelé. L'ouverture peut être ensuite comblée par une matière adhésive liquide enduite ou pulvérisée. Cette matière adhésive peut servir à fixer une autre feuille de recouvrement ou finition.

Eventuellement, en alternative, la zone comprenant le premier circuit 2 peut être emboutie, amincie pour former une cavité au moins partielle au niveau du module voire au niveau de l'antenne 2.

Cette cavité peut être remplie de colle et/ou d'air en étant fermée sous un film de recouvrement / protection de l'ensemble.

Ainsi, selon une caractéristique de l'invention, le procédé peut comprendre une étape de formation d'au moins un partie du premier circuit ou de fixation de la puce de circuit intégré 2 dans une cavité ou ouverture 4a ménagée dans l'un des substrats 4, 14.

Ainsi l'invention permet de réaliser simplement un dispositif transpondeur radiofréquence de grande portée reproductible, avec une stabilité dimensionnelle entre les antennes et stabilité fonctionnelle du transpondeur par une protection du premier circuit 2, 3 ou 22, 13.

Des laminations ultérieures de l'insert avec d'autres feuilles ne provoquent pas de glissement/déplacement relatifs des antennes entres elles.

Le premier circuit d'antenne 2, 22 (autrement appelé première antenne ou primaire) du transpondeur a une dimension de l'ordre de 8x8 mm à 12x12 mm.

Le second circuit d'antenne 9 (autrement appelé seconde antenne ou secondaire) utilise toute la surface disponible du substrat notamment elle peut s'étendre en longueur sur toute la longueur d'un substrat au format carte à puce.

D'autres formats des deux circuits d'antennes sont possibles selon les applications.

## Revendications

1. Procédé de fabrication d'un dispositif radiofréquence (1a, 1b) comprenant un premier circuit d'antenne (2, 22) relié à une puce radiofréquence (3, 13) et un second circuit d'antenne (9) associé /couplé au premier circuit,
**caractérisé en ce qu'**il comprend les étapes suivantes :
- formation du premier circuit d'antenne (2, 22) sous forme de fil conducteur déposé de manière guidée sur un premier substrat (4).
- formation du second circuit d'antenne (9) sous forme de fil conducteur déposé de manière guidée à distance calibrée du premier circuit d'antenne.

2. Procédé selon la revendication précédente, **caractérisé en ce que** le second circuit d'antenne est déposé sur le même premier substrat (4) ou autre substrat (4a) pré-positionné par rapport au substrat (4) avant formation des circuits d'antenne.

3. Procédé selon l'une des revendications précédentes, **caractérisé en ce que** le premier circuit (2, 22) comprend des portions terminales d'interconnexion à la puce radiofréquence sous forme d'alternances (6a, 6b, 25a, 25b).

4. Procédé selon l'une quelconque des revendications précédentes, **caractérisé en ce que** les portions de fil des circuits d'antenne (2, 22) sont déposées par broderie ou incrustation sur un substrat (4).

5. Procédé selon l'une quelconque des revendications précédentes, **caractérisé en ce que** le second circuit constitue une antenne passive couplée avec le transpondeur radiofréquence (15).

6. Procédé selon l'une quelconque des revendications précédentes, **caractérisé en ce qu'**il comprend une étape de dépôt de matière conductrice anisotropique sur chaque portion terminale du premier circuit d'antenne et une étape de report et connexion d'une puce enrobée / encapsulée via cette matière conductrice anisotropique.

7. Procédé selon l'une quelconque des revendications 1 à 5, **caractérisé en ce qu'**il comprend une étape de dépôt de matière conductrice par impression notamment sérigraphie sur chaque portion terminale du premier circuit d'antenne et une étape de report et connexion d'une puce nue via cette matière conductrice.

8. Procédé selon l'une quelconque des revendications précédentes, **caractérisé en ce qu'**il comprend une étape d'enrobage / encapsulation de la puce dans un boîtier, à l'exception de ses plots, avant son report contre les portions terminales de connexion.

9. Procédé selon l'une quelconque des revendications précédentes, **caractérisé en ce qu'**il comprend une étape de formation d'au moins un partie du premier circuit ou de fixation de la puce de circuit intégré dans une cavité ou ouverture (4a) ménagée dans l'un des substrats 4, 14.

10. Dispositif radiofréquence (1) comprenant un premier circuit d'antenne reliée à une puce radiofréquence et un second circuit d'antenne associé /couplé au premier circuit, **caractérisé en ce qu'**il comprend:
- un premier circuit d'antenne sous forme de fil conducteur disposé sur un premier substrat,
- un second circuit d'antenne (9) sous forme de fil conducteur positionné à distance calibrée du premier circuit d'antenne.

## Patentansprüche

1. Verfahren zur Herstellung einer Radiofrequenzvorrichtung (1a, 1b), welche einen ersten Antennenkreis (2, 22) umfasst, der mit einem Radiofrequenz-Chip (3, 13) verbunden ist, und einen zweiten Antennenkreis (9), der an den ersten Keis angeschlossen/gekoppelt ist, **dadurch gekennzeichnet, dass** es folgende Schritte umfasst:
- Bildung des ersten Antennenkreises (2, 22) in Form eines Leitungsdrahts, der geführt auf einem ersten Substrat (4) aufgebracht wird.
- Bildung des zweiten Antennenkreises (9) in Form eines Leitungsdrahts, der in kalibriertem Abstand vom ersten Antennenkreis geführt aufgebracht wird.

2. Verfahren nach dem vorhergehenden Anspruch, **dadurch gekennzeichnet, dass** der zweite Antennenkreis auf diesem ersten Substrat (4) oder einem anderen Substrat (4a), das in Bezug auf das Substrat (4) vorpositioniert ist, aufgebracht wird, bevor die Antennenkreise gebildet werden.

3. Verfahren nach einem der vorhergehenden Ansprüche, **dadurch gekennzeichnet, dass** der erste Kreis (2, 22) Endabschnitte zur Verbindung mit dem Radiofrequenz-Chip in Form von Halbschwingungen (6a, 6b, 25a, 25b) umfasst.

4. Verfahren nach einem der vorhergehenden Ansprüche, **dadurch gekennzeichnet, dass** die Drahtabschnitte der Antennenkreise (2, 22) durch Stickerei oder Druckverfahren auf einem Substrat (4) aufgebracht sind.

5. Verfahren nach einem der vorhergehenden Ansprüche, **dadurch gekennzeichnet, dass** der zweite Kreis eine passive Antenne darstellt, die an den Radiofrequenz-Transponder (15) gekoppelt ist.

6. Verfahren nach einem der vorhergehenden Ansprüche, **dadurch gekennzeichnet, dass** es einen Schritt des Aufbringens von leitfähigem, anisotropem Material auf jedem Endabschnitt des ersten Antennenkreises und einen Schritt des Übertrags und Anschlusses eines umhüllten/gekapselten Chips mittels dieses leitfähigen anisotropen Materials umfasst.

7. Verfahren nach einem der Ansprüche 1 bis 5, **dadurch gekennzeichnet, dass** es einen Schritt des Aufbringens des leitfähigen Materials durch Druck, insbesondere Siebdruck, auf jedem Endabschnitt des ersten Antennenkreises und einen Schritt des Übertrags und des Anschlusses eines nicht umhüllten Chips über dieses leitfähige Material umfasst.

8. Verfahren nach einem der vorhergehenden Ansprüche, **dadurch gekennzeichnet, dass** es einen Schritt der Umhüllung/Kapselung des Chips mit Ausnahme der Stifte in einem Gehäuse vor dessen Übertrag an die Anschlussendabschnitte umfasst.

9. Verfahren nach einem der vorhergehenden Ansprüche, **dadurch gekennzeichnet, dass** es einen Schritt umfasst, in dem mindestens ein Teil des ersten Kreises gebildet wird oder der Chip des Schaltkreises in einem Hohlraum oder einer Öffnung (4a), der oder die in einem der Substrate 4, 14 eingearbeitet wurde, befestigt wird.

10. Radiofrequenzvorrichtung (1), die einen ersten Antennenkreis umfasst, der mit einem Radiofrequenz-Chip verbunden ist, und einen zweiten Antennenkreis, der an den ersten Kreis angeschlossen/gekoppelt ist, **dadurch gekennzeichnet, dass** sie folgendes umfasst:
- einen ersten Antennenkreis in Form eines Leitungsdrahts, der auf einem ersten Substrat aufgebracht ist,
- einen zweiten Antennenkreis (9) in Form eines Leitungsdrahts, der in kalibriertem Abstand zum ersten Antennenkreis positioniert ist.

## Claims

1. A method for manufacturing a radio-frequency device (1a, 1b) comprising a first antenna circuit (2, 22) connected to a radio-frequency chip (3, 13) and a second antenna circuit (9) associated with / coupled to the first circuit,
**characterised in that** it comprises the following steps:
- forming the first antenna circuit (2, 22) in the form of a conductive wire deposited in a guided manner on a first substrate (4),
- forming the second antenna circuit (9) in the form of a conductive wire deposited in a guided manner at a calibrated distance from the first antenna circuit.

2. A method according to the preceding claim, **characterised in that** the second antenna circuit is deposited on the same first substrate (4) or other substrate (4a) pre-positioned with respect to the substrate (4) before formation of the antenna circuits.

3. A method according to either of the preceding claims, **characterised in that** the first circuit (2, 22) comprises end portions for interconnection to the radio-frequency chip in the form of alternations (6a, 6b, 25a, 25b).

4. A method according to any of the preceding claims, **characterised in that** the wire portions of the antenna circuits (2, 22) are deposited by embroidery or overlaying on a substrate (4).

5. A method according to any of the preceding claims, **characterised in that** the second circuit constitutes a passive antenna coupled with the radio-frequency transponder (15).

6. A method according to any of the preceding claims, **characterised in that** it comprises a step of deposition of anisotropic conductive material on each end portion of the first antenna circuit and a step of transfer and connection of a chip coated/encapsulated via this anisotropic conductive material.

7. A method according to any of claims 1 to 5, **characterised in that** it comprises a step of deposition of conductive material by printing, in particular screen printing, on each end portion of the first antenna circuit and a step of transfer and connection of a bare chip via this conductive material.

8. A method according to any of the preceding claims, **characterised in that** it comprises a step of coating/encapsulation of the chip in a can, with the exception of its pins, before transfer thereof against the end connection portions.

9. A method according to any of the preceding claims, **characterised in that** it comprises a step of forming at least part of the first circuit or of fixing the integrated-circuit chip in a cavity or opening (4a) provided in one of the substrates (4, 14).

10. A radio-frequency device (1) comprising a first antenna circuit connected to a radio-frequency chip and a second antenna circuit associated with / coupled to the first circuit, **characterised in that** it comprises:
- a first antenna circuit in the form of a conductive wire disposed on a first substrate,
- a second antenna circuit (9) in the form of a conductive wire positioned at a calibrated distance from the first antenna circuit.
